# EUROPÄISCHE PATENTSCHRIFT

(11) **EP 0 991 347 B1**
(45) Veröffentlichungstag und Bekanntmachung des Hinweises auf die Patenterteilung: **23.05.2001**
(21) Anmeldenummer: 98936260.3
(22) Anmeldetag: 23.06.1998
(51) Int. Cl.: A47C 31/02

(54) **STÜTZTEIL FÜR EINEN SITZ**
SUPPORTING PART FOR A SEAT
PARTIE DE SOUTIEN D'UN SIEGE

(30) Priorität: 23.06.1997 AT 38497
(43) Veröffentlichungstag der Anmeldung: 12.04.2000
(73) Patentinhaber: Magna Auteca Zweigniederlassung der Magna Holding AG, 8160 Weiz (AT)
(72) Erfinder: MACHER, David, A-8570 Voitsberg (AT); ZORN, Heinz, A-8063 Eggersdorf (AT)
(74) Vertreter: Pfenning, Meinig & Partner
(86) Internationale Anmeldenummer: DE9801781
(87) Internationale Veröffentlichungsnummer: WO9858572

(56) Entgegenhaltungen:
- EP-A- 0 143 742
- EP-A- 0 405 681
- WO-A-96/28056

## Beschreibung

Die Erfindung betrifft einen Stützteil zur Auflage auf einem Sitz, wie er im Oberbegriff des Anspruchs 1 beschrieben ist. Weiterhin umfaßt die Erfindung einen Sitz mit einem als Einlageteil ausgebildeten Stützteil, wie er im Oberbegriff des Anspruchs 11 beschrieben ist.

Sitze mit Polster aus Schaumkunststoff sind im privaten Gebrauch jedoch auch im modernen Fahrzeugbau sehr verbreitet. Sie werden vor allem für Polstermöbel jedoch auch für Schienen- und Straßenfahrzeuge und auch in Flugzeugen eingesetzt. Derartige Sitze sind aus den Dokumenten DE 85 06 816 U, WO 87/06894 A1 und EP 0 190 064 A1 bzw. aus den Dokumenten WO-A-9628056, EP-A-0143742 und EP-A-0 405 681 bekannt. Nachteilig bei derartigen Sitzen ist, daß diese derart ausgebildeten Sitze keine Möglichkeit zur Anpassung an einen bestimmten Benutzer aufweisen. Vielmehr werden in den obengenannten Dokumenten Sitze beschrieben, die einen mehrschichtigen Aufbau aufweisen und dadurch verschiedenartigen Anforderungen gerecht werden, wie zum Beispiel feuerhemmende Schichten aufweisen, jedoch sich nicht auf Belange eines einzigen Benutzers anpassen lassen.

Der Erfindung liegt die Aufgabe zugrunde, einen Stützteil bzw. einen Sitz zu schaffen, die an eine äußere Raumform bzw. an die Körperform eines Benutzers anpaßbar sind.

Diese Aufgabe der Erfindung wird durch die kennzeichnenden Merkmale des Anspruchs 1 bzw. des Anspruchs 11 in Verbindung mit den Merkmalen der entsprechenden Oberbegriffe gelöst.

Der größte Vorteil besteht darin, daß ein Schicht des Stützteils aus einer mehrfach thermisch reversiblen Kunststoffschaumschicht besteht, welche sich nach dem Erwärmen auf eine Umformtemperatur einer aufgepreßten Raumform anpaßt und diese nach einem Abkühlvorgang beibehält. Ein weiterer Vorteil entsteht dadurch, daß bei neuerlichem Erwärmen dieser Schicht sie sich in ihre ursprüngliche Raumform rückstellt und ein neuerlicher Formvorgang durchgeführt werden kann.

Durch diese vorteilhafte Ausbildung wird eine optimale Abstützung des Körpers eines Benutzers auf einem Sitz ermöglicht, wodurch eine Vermeidung von Beschwerden nach längerem Sitzen, zum Beispiel im Auto, und eine Verringerung von Haltungsschäden erzielt werden kann.

Ein weiterer Vorteil besteht darin, daß die mehrfach thermisch reversible Schicht des Stützteils bzw. des Einlageteils auf eine eigene Heizschicht aufgebracht ist, welche eine Erwärmung der Schicht auf die Umformtemperatur ermöglicht. Diese Heizschicht wird über eine Energiequelle versorgt, welche zum Beispiel bei einem Auto aus der standardmäßigen Fahrzeugbatterie bestehen kann, wodurch ein aufwendiges Anbringen einer eigenen Energiequelle unterbleiben kann.

Weiterhin ist vorteilhaft, daß die Temperatur der Heizschicht über ein Regelorgan geregelt werden kann, wodurch ein Betrieb unter der Umformtemperatur der thermisch reversibel verformbaren Schicht ermöglicht wird, so daß der Stützteil bzw. der Einlageteil als herkömmliche Sitzheizung Verwendung finden kann.

Durch eine Einbringung des bzw. der Stützteile in einen Sitz können spezielle Anforderungen eines Benutzers erfüllt werden. So können diese Stützteile auch als Einlegeteile ausgebildet sein, wodurch diese an bestimmten Problemzonen des Körpers des Benutzers angeordnet werden und so schmerzlindernde Auswirkungen vor allem bei Haltungsschäden erzielt werden können. Dies kann ebenfalls durch die Beheizung der Einlegeteile im Bereich von schmerzenden Gliedmaßen des Benutzers ermöglicht werden, so daß ein an die Kontur des Benutzers angepaßter Sitz mit Heizung zur Verfügung gestellt werden kann.

Weitere vorteilhafte Ausbildungen sind in den Unteransprüchen beschrieben und sind der detaillierten Figurenbeschreibung zu entnehmen.

Die Erfindung wird im nachfolgenden anhand der in den Zeichnungen dargestellten Ausführungsbeispiele näher erläutert. Es zeigen:
- Fig. 1: einen erfindungsgemäßen Stützteil, in auf einem Sitz aufgesetzter Lage, in Seitenansicht, geschnitten,
- Fig. 2: den Schichtaufbau des erfindungsgemäßen Stützteils, in Seitenansicht geschnitten, in vergrößerter Darstellung,
- Fig. 3: den erfindungsgemäßen Stützteil nach Fig. 2, in bei einer Belastung verformter Ausbildung, in Seitenansicht, teilweise geschnitten, in stark vereinfachter Darstellung,
- Fig. 4: einen Sitz, insbesondere Fahrzeugsitz, in dem der erfindungsgemäße Stützteil gemäß Fign. 1 bis 3 integriert ist, in Seitenansicht, teilweise geschnitten, und
- Fig. 5: eine andere Ausführungsvariante des Stützteils nach Fig. 4, teilweise geschnitten.

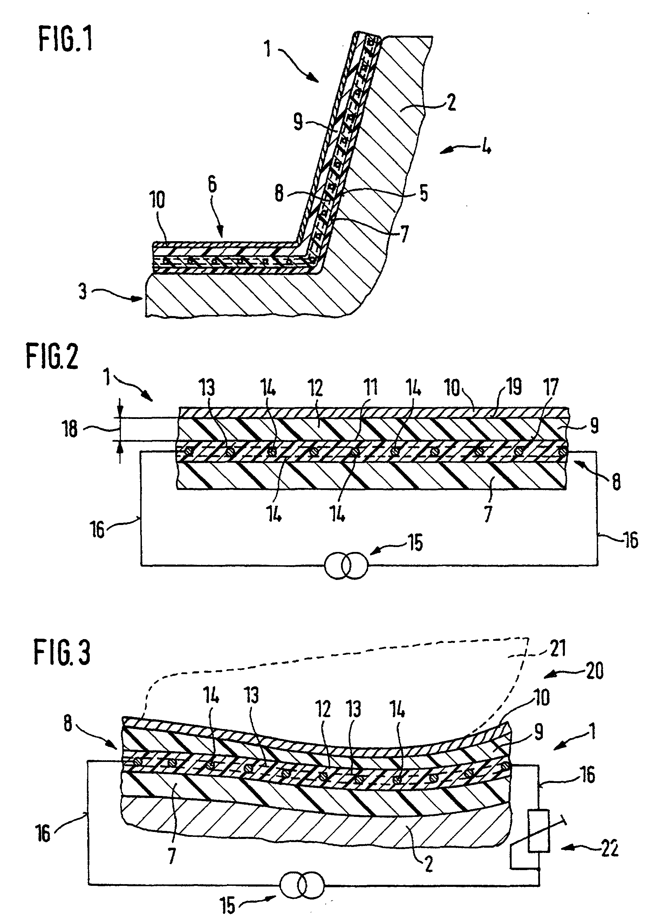

In den Fign. 1 bis 3 ist der mehrschichtige Aufbau eines Stützteils dargestellt, der in seiner Form an die Form eines Benutzers anpaßbar ist. Dazu ist als wesentlicher Bestandteil eine als Zwischenschicht 9 ausgebildete Kunststoffschicht aus thermisch reversiblem verformbarem Material und eine das Material aufheizende Heizeinrichtung vorgesehen. Dieses Material ist ein Kunststoff bzw. Kunststoffschaum mit geschlossenen Poren, in die Gas zum Beispiel Luft eingeschlossen ist. Bei Erwärmen des Kunststoffs über eine Umform- oder Verformungstemperatur und Aufbringen einer Kraft verformen sich die Poren abhängig vom Kraftvektor, das heißt, das Gas in diesen wird komprimiert und nach Abkühlen unter die Umformtemperatur wird die Form der Poren auch bei Entfernung der Kraft durch das sie umgebende erstarrte Kunststoffmaterial beibehalten.

Wird das Kunststoffmaterial erneut auf entsprechende Temperaturen erwärmt und wird keine Kraft aufgebracht, so nehmen die Poren aufgrund des Gasdrucks ihre ursprüngliche Form an. Der Umformvorgang kann bei entsprechender Lebensdauer des Materials beliebig oft wiederholt werden.

Die Heizeinrichtung ist als Widerstandsheizung ausgebildet, die elektrische Leiter als Heizelemente und eine Spannungsquelle umfaßt. In dem dargestellten Ausführungsbeispiel sind die elektrischen Leiter in eine getrennte Heizschicht 8 eingebettet, sie können aber auch im Verbund mit dem thermisch reversibel verformbaren Material vorgesehen sein. Beispielsweise eignen sich als elektrische Leiter Carbonfasern aus einer Mehrzahl zu einem Strang geformten Filamenten, die gitter-, bogen-, mäanderförmig oder in sonstiger Weise in die Heizschicht 8 oder die Kunststoffschicht aus dem verformbaren Material eingearbeitet sind. Für die elektrischen Leiter sind auch andere Materialien, wie Kupfer oder andere elektrisch leitende Metalle verwendbar.

Der in Fig. 1 dargestellte Stützteil 1 ist zur Auflage auf alle möglichen Sitze 2, wie zum Beispiel Fahrzeugsitze, Polstersitze und so weiter, welche einen durchgehenden Sitzteil 3 bzw. Rückenlehnenteil 4 aufweisen, geeignet. Der Stützteil 1 wird hierbei auf eine dem Benutzer zugewandten Oberfläche 5 des Sitzes 2 aufgelegt bzw. mit dieser verbunden. Diese Verbindung kann über alle möglichen bzw. bekannten Verbindungsvorrichtungen, die in diesem Fall zur Anwendung kommen können, ausgeführt sein, wie zum Beispiel Klettverschluß oder ähnliches. Der Vorteil einer derartigen Verbindungsvorrichtung liegt darin, daß diese im Bedarfsfall für eine Reinigung ohne großen Aufwand gelöst und hinterher wieder hergestellt werden kann.

Der Stützteil 1 ist bei dieser Ausführungsform durch einen mehrlagigen bzw. mehrschichtigen Bauteil 6 gebildet und weist eine der Oberfläche 5 des Sitzes 2 zugewandte Trägerschicht 7 auf. Auf der dem Sitz 2 abgewandten Seite der Trägerschicht 7 befinden sich die Heizschicht 8, darauf folgen die Zwischenschicht 9 aus dem thermisch reversibel verformbaren Material und eine diese Zwischenschicht 9 in entgegengesetzter Richtung zum Sitz 2 begrenzende Deckschicht 10.

In Fig. 2 ist der Schichtaufbau anhand eines Teilbereiches des erfindungsgemäßen Stützteils 1 dargestellt.

An einer dem Sitz 2 zugewandten Seite des Stützteils 1 ist die Trägerschicht 7 angeordnet, welche vorzugsweise aus einem elastisch federnden bzw. geschäumten Kunststoff besteht. Durch diese Wahl des Materials der Trägerschicht 7 ist die Anpassung des gesamten Stützteils 1 an die Raumform des Sitzes 2 gewährleistet.

Grundsätzlich sei festgehalten, daß die einzelnen Schichten über Klebungen miteinander verbunden sind, wobei jedoch alle anderen Verbindungsmethoden, welche für den Stützteil 1 Verwendung finden können, wie zum Beispiel thermisches Kaschieren und ähnliches, verwendet werden können.

Auf der der Deckschicht 10 zugewandten Oberfläche 11 der Trägerschicht 7 ist die Heizschicht 8, welche zum Erwärmen der Zwischenschicht 9 dient, angeordnet. Bei dieser Heizschicht 8 handelt es sich zum Beispiel um eine Epoxidharzschicht 12, in die ein Gitternetz von Stromleiterbahnen 13, zum Beispiel aus Carbonfasern 14 bestehen, eingebettet ist. Die Leiterbahnen 13 können auch zwischen zwei isolierenden Folien angeordnet sein, wobei die Gesamtheit die Heizschicht 8 bildet. Durch diese Ausbildung der Heizschicht 8 bzw. der Epoxidschicht 12 mit den eingebetteten Carbonfasern 14 wird eine Erwärmung derselben bzw. der umliegenden Schichten durch Anlegen eines Stroms aus einer, wie hier schematisch angedeutet, Energiequelle 15 über Leitungen 16 ermöglicht. Diese Energiequelle kann durch einen Netzanschluß oder aber auch Akkumulatoren ausgeführt sein. Der Strom aus der Energiequelle 15 ist regelbar, so daß eine unterschiedliche Erwärmung der Heizschicht 8 bzw. der umliegenden Schichten ermöglicht wird. In diesem Fall ist als Materialgemisch für die Trägerschicht 7 aus größenteils PVC und anteilsmäßig PU von Vorteil, da dieses Material einen geringen Wärmeleitkoeffizienten aufweist. Durch diese Wahl des Materials wird ein unerwünschter und möglicherweise den Sitz 2 negativ beeinflussender Wärmeübergang von der Heizschicht 8 aus verhindert.

Auf der der Oberfläche 11 der Trägerschicht 7 abgewandten Oberfläche 17 der Heizschicht 8 ist die Zwischenschicht 9 angeordnet. Diese Zwischenschicht 9 besteht zum Beispiel aus Ethylenvinylschaum oder FCKW-freiem Polyethylenschaum mit geschlossenen Luftporen, welcher thermisch reversibel verformbar ausgebildet ist, wobei jedoch jeder weitere Kunststoff, welcher dieselben Anforderungen erfüllt, zur Anwendung kommen kann. Durch das Material der Zwischenschicht 9 wird, wie schon oben erwähnt, ermöglicht, daß die Zwischenschicht 9 bei einer eine Gebrauchstemperatur überschreitenden Umformtemperatur aus einer Ausgangsraumform in eine an einen Benutzer angepaßte zweite Raumform umformbar ist. Diese zweite Raumform wird nach Unterschreiten der Umformtemperatur beibehalten und so ihre spezifisch an einen Benutzer angepaßte Form im Bereich der Gebrauchstemperatur, welche bei Benutzung im Bereich der Körpertemperatur liegt, beibehalten. Das Material der Zwischenschicht 9 weist Eigenschaften ähnlich eines Memoryschaums auf, das heißt, daß es bei Aufbringen einer Kraft hoch kompressibel ist und sich nach Beendigung des Belastungsvorganges in seine ursprüngliche Raumform rückstellt.

Eine Anpassung der Raumform der Zwischenschicht 9 an einen weiteren bzw. neuen Benutzer wird dadurch ermöglicht, daß die Zwischenschicht 9 bei neuerlicher Erwärmung auf die Umformtemperatur ihre Ausgangsraumform einnimmt und so eine erneute Anpassung an eine andere Raumform ermöglicht wird, wobei dieser beschriebene Vorgang beliebig wiederholt werden kann.

Eine Dichte bzw. das Raumgewicht des Materials der Zwischenschicht 9 kann von 30 kg/m³ bis 280 kg/m³ betragen, wodurch eine Anpassung an verschiedene Belastungen bzw. an verschiedene Gewichte der Benutzer Rücksicht genommen werden kann. Aus diesem Grund kann die Zwischenschicht 9 im Bereich des Sitzteils 3 eine höhere Dichte aufweisen als die Zwischenschicht 9 im Bereich des Rückenlehnenteils 4, da im Bereich des Sitzteils 3 eine höhere Belastung durch das Körpergewicht des Benutzers anliegt.

Die Umformtemperatur des Materials der Zwischenschicht 9 liegt bei 50° C bis 90° C, vorzugsweise jedoch bei 70° C bis 80° C. Dieser Temperaturbereich erweist sich als besonders vorteilhaft, da hier eine Umformung der Zwischenschicht 9 ermöglicht wird, jedoch aber eine Verformung bzw. Zerstörung der angrenzenden Schichten vermieden wird. Selbstverständlich kann auch eine Dicke 18 der Zwischenschicht 9 durch Anwendung verschiedener Raumgewichte variiert werden, das heißt, daß bei einem höheren Raumgewicht des Materials die Zwischenschicht 9 eine geringere Dicke 18 aufweist.

Auf der der Heizschicht 8 abgewandten Oberseite 19 der Zwischenschicht 9 ist weiterhin die Deckschicht 10 aufgebracht. Diese zum Beispiel durch eine textile Lage, wie einem Gewebe, Gewirke, Geflecht gebildete Deckschicht 10 kann durch Kleben, jedoch aber auch durch thermisches Kaschieren auf der Zwischenschicht 9 aufgebracht sein. Die Herstellung des Stützteils 1 erfolgt vorzugsweise in großflächigen Bahnen bzw. Rollen, wobei die Deckschichten 10 auf die Zwischenschicht 9 aufgebracht werden muß. In diesem Fall ist eine Verbindung der Deckschicht 10 mit der Zwischenschicht 9 durch thermisches Kaschieren von Vorteil, da ein großflächiges Aufbringen einer eigenen Kleberschicht auf der Zwischenschicht 9 sehr aufwendig ist und ebenfalls die vorteilhaften Eigenschaften der Zwischenschicht 9 durch ihre Eigensteifigkeit beeinflussen kann.

In Fig. 3 ist ein Formvorgang eines auf einen Sitz 2 aufgelegten Stützteils 1 durch einen menschlichen Körper 20, insbesondere durch ein in strichlierten Linien angedeutetes Gesäß 21, dargestellt.

Um ein Anpassen des Stützteils 1 bzw. der Zwischenschicht 9 an die Raumform eines menschlichen Körpers 20 zu ermöglichen, wird die Zwischenschicht 9 durch die Heizschicht 8 auf eine Temperatur von ca. 80° C wie folgt erwärmt. Über die mit der Stromquelle 15 in Verbindung stehenden Leitungen 16 wird elektrische Energie an die vorzugsweise aus Carbonfasern 14 bestehenden Stromleiterbahnen 13, welche in die Epoxidschicht 12 eingebettet sind, angelegt. Diese Stromleiterbahnen 13 bzw. Carbonfasern 14 weisen einen hohen elektrischen Widerstand auf, wodurch es, wie allgemein bekannt, durch Anlegen einer elektrischen Energie zur Erwärmung derselben kommt. Daraus ergibt sich der Vorteil, daß durch ein regulierbares Anlegen einer elektrischen Energie an die Heizschicht 8 bzw. an die Carbonfasern 14 die endgültige Erwärmung der Heizschicht 8 reguliert bzw. gesteuert werden kann.

Wurde die Zwischenschicht 9 auf ihre Umformtemperatur erwärmt, so wird der menschliche Körper 20, bzw. in diesem Fall das Gesäß 21, auf den auf den Sitz 2 aufgelegten Stützteil 1 aufgebracht und die Zwischenschicht 9 aufgrund ihrer thermisch verformbaren Eigenschaften in ihrer Raumform an die Raumform des Gesäßes 21 angepaßt. Nach Aufbringen des Gesäßes 21 auf den Stützteil 1 wird die Versorgung der Heizschicht 8 mit elektrischer Energie unterbrochen, wodurch ein selbständiges Absinken der Temperatur der Zwischenschicht 9 unter die Umformtemperatur ermöglicht wird.

Da durch das Aufbringen des menschlichen Körpers 20 bzw. des Gesäßes 21 auf den Stützkörper 1 selbstverständlich auch alle anderen angeordneten Schichten bzw. der Sitz 2 verformt wird, ist es von besonderem Vorteil, die aus Carbonfasern 14 bestehenden Stromleiterbahnen 13 gitter- bzw. netzförmig in die Heizschicht 8 einzubetten, da diese Heizschicht 8 sich ebenfalls Verformungen elastisch anpaßt und so ein Beschädigen bzw. Zerstören des Carbonfasergitters bzw. -netzes gesichert vermieden werden kann.

Vorteilhafterweise weisen die Materialien der einzelnen Schichten des Stützteils 1 elastische Rückstelleigenschaften auf, wodurch eine Rückstellung in die ursprüngliche Lage durch eine, durch das Setzen auf den Sitz 2 bzw. das Erheben eines Benutzers vom Sitz 2 verursachte Verformung sichergestellt ist.

Ein besonderer Vorteil ergibt sich durch die Anordnung einer elektrischen Regeleinrichtung 22 in den Leitungen 16, da dadurch eine Regelung der Zufuhr von elektrischer Energie zur Heizschicht 8 ermöglicht wird. Durch diese Ausbildung wird erreicht, daß der Stützteil 1 bzw. die Heizschicht 8 bei einer Erwärmung unter der Umformtemperatur der Zwischenschicht 9 als Sitzbeheizung verwendet werden kann, da durch diese Erwärmung unter der Umformtemperatur der Zwischenschicht 9 keine Beeinflussung der Zwischenschicht 9 bzw. der weiteren Schichten erfolgt.

Durch die mehrfach thermisch reversible Ausführung der Zwischenschicht 9 ist es möglich, ein und denselben Stützteil 1 an einen weiteren Benutzer anzupassen. In diesem Fall wird die Zwischenschicht 9 über die Heizschicht 8 neuerlich auf die Umformtemperatur von ca. 80° C erwärmt, wodurch sich diese in ihre ursprüngliche Raumform rückstellt und ein neuerliches Aufbringen einer bestimmten Raumform ermöglicht wird.

Um eine schnellere bzw. gesicherte, vollflächige Erwärmung der Zwischenschicht 9 zu gewährleisten, ist es auch möglich, beidseits der Zwischenschicht 9 eine Heizschicht 8 vorzusehen. Diese zwei Heizschichten 8 können gemeinsam über die Regeleinrichtung 22 mit elektrischer Energie versorgt werden, wodurch ein beidseitig gleichmäßiges Erwärmen der Zwischenschicht 9 gewährleistet wird.

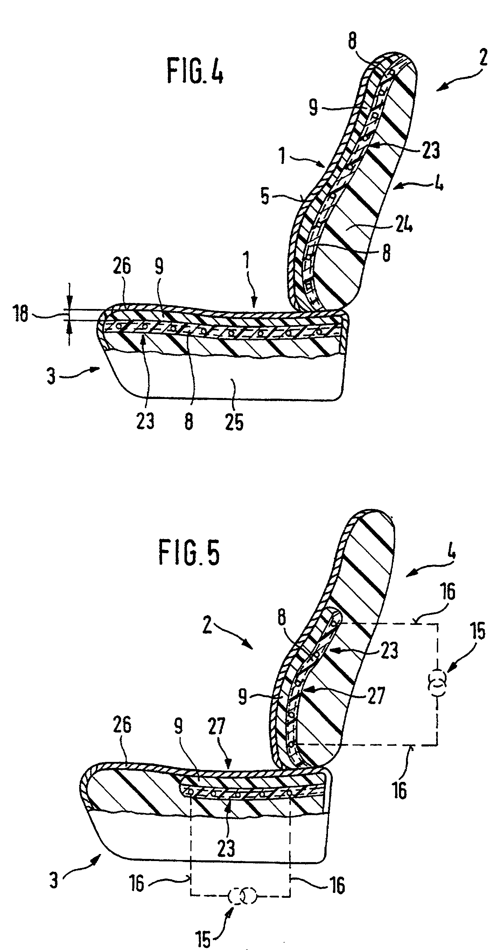

In Fig. 4 ist ein Sitz 2 mit jeweils einem voneinander unabhängigen Sitzteil 3 und Rückenlehnenteil 4 dargestellt. Bei dieser Ausführungsform ist der Stützteil 1 in den Schichtaufbau des Sitzteils 3 bzw. des Rückenlehnenteils 4 integriert, wobei die einzelnen Stützteile 1 als Einlageteile 23 ausgebildet sind.

In diesem Fall können die einzelnen Einlageteile 23 nur aus der Heizschicht 8 und der thermisch reversibel verformbaren Zwischenschicht 9 bestehen, da die Heizschicht 8 auf einen Stützkörper 24 des Rückenlehnenteils 4 bzw. auf einen Stützkörper 25 des Sitzteils 3, wie sie bei herkömmlichen Sitzen 2 vorhanden sind, aufgebracht sein kann. Erfahrungsgemäß ist die Belastung durch den menschlichen Körper 20 bzw. die Verformung beim Sitzteil 3 eines Sitzes 2 stärker als im Rückenlehnenteil 4. Aufgrund dieser Tatsache und die getrennte Ausbildung der Einlageteile 23 ist es möglich, die einzelnen Einlageteile 23 in bezug auf ihre Dicke bzw. Beschaffenheit der einzelnen Schichten auf die Belastungen, welche auf den Rückenlehnenteil 4 oder den Sitzteil 3 des Sitzes 2 einwirken, abzustimmen.

So ist es für den Sitzteil 3 des Sitzes 2 zu empfehlen, daß die Zwischenschicht 9 des entsprechenden Einlageteils 23 eine relativ hohe Dichte aufweist, um die Dicke 18 der thermisch reversibel verformbar ausgebildeten Zwischenschicht 9 relativ gering zu halten, wodurch der Platzbedarf des Einlageteils 23 im Sitzteil 3 geringer wird. Um im Rückenlehnenteil 4 des Sitzes 2 unter Belastung dieselbe Gesamtausdehnung des Einlageteils 23 wie im Sitzteil 3 zu erhalten, ist es möglich, diese Zwischenschicht 9 im Material geringerer Dichte auszubilden, um so die gleiche Dicke 18 der Zwischenschicht 9 im Rückenlehnenteil 4 wie eine Dicke 18 der Zwischenschicht 9 im Sitzteil 3 zu erreichen.

Auch kann bei dieser Ausführungsvariante beim Schichtaufbau der Einlageteile 23 auf die Deckschicht 10 verzichtet werden, da diese durch einen Bezugsstoff 26, welcher den Sitzteil 3 und den Rückenlehnenteil 4 des Sitzes 2 umspannt, ersetzt ist.

Wie nun besser in Fig. 5 dargestellt ist, ist es auch möglich, die Einlageteile 23 für Sitze 2 nur bereichsweise in dem Sitzteil 3 und dem Rückenlehnenteil 4 anzuordnen. In diesem Ausführungsbeispiel sind die Einlageteile 23 als Abschnitte 27 ausgebildet, welche gezielt an Problemzonen des menschlichen Körpers, bzw. wo diese Problemzonen Kontakt zum Sitz 2 haben, angebracht werden. Diese Anordnung der Abschnitte 27 ist besonders vorteilhaft zur Anbringung im Bereich des Gesäßes 21 bzw. im Rücken- und/oder Nierenbereich, da durch die thermisch reversibel verformbar ausgebildete Zwischenschicht 9 eine optimale Anpassung der Abschnitte 27 an diese Körperzonen ermöglicht wird.

Da sich die Einlegeteile 23 bzw. die Abschnitte 27 nach der Umformung bzw. der Anpassung an den menschlichen Körper 20 jedoch auch unter der Umformtemperatur der Zwischenschicht 9 beheizen lassen, kann dies schmerzlindernde Wirkungen bzw. Haltungsschäden verringernde Auswirkungen haben.

Selbstverständlich ist es bei den Ausführungen der Stützteile 1, bei welchen diese als Einlageteile 23 in den Sitzaufbau integriert sind, wie in den Fign. 4 und 5 beschrieben wird, auch möglich, jeden einzelnen Einlageteil 23 über Leitungen 16 mit einer Stromquelle 15 zu verbinden, wie dies schematisch in strichlierten Linien in Fig. 5 angedeutet ist. Durch diese Ausbildung kann jeder Einlageteil 23 getrennt mit elektrischer Energie beaufschlagat werden und so jeder Einlageteil 23 einzeln an die Bedürfnisse eines Benutzers angepaßt werden. Gleichzeitig ist es durch eine getrennte Erwärmung der Zwischenschichten 9 der Einlageteile 23 unter die Umformtemperatur derselben möglich, den Einlageteil 23 im Sitzteil 3 bzw. den Einlageteil 23 im Rückenlehnenteil 4 einzeln als Sitzheizung zu verwenden.

Abschließend sei darauf hingewiesen, daß in den zuvor beschriebenen Ausführungsbeispielen einzelne Teile unproportional vergrößert dargestellt wurden, um das Verständnis der erfindungsgemäßen Lösung zu verbessern.

## Patentansprüche

1. Stützteil für einen Sitz, insbesondere für Fahrzeugsitze, der mindestens eine Kunststoffschicht aufweist,
**dadurch gekennzeichnet,**
daß die mindestens eine Kunststoffschicht (9) aus einem thermisch reversibel verformbaren Material besteht, das bei einer eine Gebrauchstemperatur überschreitenden Umformtemperatur aus einer ersten Raumform in eine beliebig vorgebbare zweite Raumform umformbar ist und in einem Temperaturbereich unter der Umformtemperatur in dieser zweiten Raumform verbleibt und daß eine mit der Kunststoffschicht in Verbindung stehende Heizeinrichtung (8) vorgesehen ist, die zur thermischen Behandlung der aus dem thermisch reversiblen Material bestehenden Kunststoffschicht (9) ausgebildet ist.

2. Stützteil nach Anspruch 1, dadurch gekennzeichnet, daß das thermisch reversibel mehrfach verformbare Material der Kunststoffschicht (9) als Kunststoffmaterial mit Gas einschließenden geschlossenen Poren ausgebildet ist.

3. Stützteil nach Anspruch 1 oder Anspruch 2, dadurch gekennzeichnet, daß das thermisch reversibel verformbare Material als Ethylenvinylschaum mit geschlossenen Luftporen ausgebildet ist.

4. Stützteil nach einem der Ansprüche 1 bis 3, dadurch gekennzeichnet, daß die Umformtemperatur des thermisch reversiblen Materials zwischen 50° C bis 90° C, vorzugsweise bei 80° C liegt.

5. Stützteil nach einem der Ansprüche 1 bis 4, dadurch gekennzeichnet, daß die Dichte des thermisch reversibel verformbaren Materials zwischen 10 kg/m³ und 200 kg/m³, vorzugsweise zwischen 30 kg/m³ bis 180 kg/m³ liegt.

6. Stützteil nach einem der Ansprüche 1 bis 5, dadurch gekennzeichnet, daß die Heizeinrichtung als Widerstandsheizung ausgebildet ist, die mit einer Stromquelle (15) verbundene Heizelemente (13) aufweist.

7. Stützteil nach Anspruch 6, dadurch gekennzeichnet, daß die Heizelemente (13) als elektrische Leiterbahnen oder Leitungsdrähte oder dergleichen ausgebildet sind.

8. Stützteil nach Anspruch 7, dadurch gekennzeichnet, daß die Heizelemente als Carbonfasern (14) ausgebildet sind.

9. Stützteil nach einem der Ansprüche 6 bis 8, dadurch gekennzeichnet, daß die Heizelemente in die Kunststoffschicht aus thermisch reversibel verformbarem Material eingebettet sind und/oder Bestandteil mindestens einer Heizschicht (8) sind, die mit der Kunststoffschicht (9) aus dem thermisch reversibel verformbarem Material verbunden ist.

10. Stützteil nach einem der Ansprüche 1 bis 9, gekennzeichnet durch einen mehrschichtigen Aufbau, der die mindestens eine Kunststoffschicht (9) aus dem thermisch reversibel verformbaren Material, eine Trägerschicht (7) zum Abstützen der Kunststoffschicht (9), gegebenenfalls mindestens eine Heizschicht (8) und eine Deckschicht (10) zum Abdecken der mindestens einen Kunststoffschicht und/oder der Heizschicht aufweist, wobei die Schichten durch Kaschieren, Verkleben, Laminieren, Verhaken oder dergleichen miteinander verbunden sind.

11. Sitz, insbesondere Fahrzeugsitz, mit einem Rückenlehnenteil und einem Sitzteil, die jeweils einen Stützkörper aufweisen,
**dadurch gekennzeichnet ,**
daß im Rückenlehnenteil (4) und/oder im Sitzteil (3) mindestens ein Stützteil nach einem der Ansprüche 1 bis 10 integriert ist.

12. Sitz nach Anspruch 11, dadurch gekennzeichnet, daß die Kunststoffschicht aus thermisch reversibel verformbarem Material im Rückenlehnenteil (4) und im Sitzteil (3) eine unterschiedlich große Dichte aufweisen.

## Claims

1. Support for a seat, particularly for vehicle seats, having at least one plastic layer, characterised by the fact that the at least one plastic layer (9) is made from a reversibly repeat-mouldable thermoplastic material, which can be moulded from an initial shape into another given shape by being heated to a plasticizing temperature above normal use temperature, retaining this other shape when in a temperature zone below the plasticizing temperature; and that a heating device (8) is connected to the plastic layer for the heat treatment of the plastic layer (9) consisting of a reversibly thermoplastic material.

2. Support as in Claim 1, characterised by the fact that the reversibly repeat-mouldable thermoplastic material from which the plastic layer (9) is made is in the form of a plastic material with closed pores which enclose gas.

3. Support as in Claim 1 or 2, characterised by the fact that the reversibly mouldable thermoplastic material is in the form of ethylene vinyl foam with closed air pores.

4. Support as in one of Claims 1 to 3, characterised by the fact that the plasticizing temperature of the reversibly thermoplastic material is between 50° C and 90° C, preferably 80° C.

5. Support as in one of Claims 1 to 4, characterised by the fact that the density of the reversibly repeat-mouldable thermoplastic material is between 10 kg/m³ and 200 kg/m³, preferably between 30 kg/m³ and 180 kg/m³.

6. Support as in one of Claims 1 to 5, characterised by the fact that the heating device is in the form of resistance heating, with heating elements (13) which are connected to a power source (15).

7. Support as in Claim 6, characterised by the fact that the heating elements (13) are in the form of electrical strip conductors or conducting wires or similar.

8. Support as in Claim 7, characterised by the fact that the heating elements are in the form of carbon fibres (14).

9. Support as in one of Claims 6 to 8, characterised by the fact that the heating elements are embedded in the reversibly thermoplastic plastic layer, and/or are a component of at least one heating layer (8), which is connected to the plastic layer (9) made of reversibly thermoplastic material.

10. Support as in one of Claims 1 to 9, characterised by a multilayered construction having at least one plastic layer (9) made of reversibly thermoplastic material, a base layer (7) to support the plastic layer (9), and, where required, at least one heating layer (8) and an outer layer (10) to cover the at least one plastic layer and/or the heating layer; in which the layers are joined to each other by lamination, adhesion, laminating, interlocking or similar.

11. Seat, particularly a vehicle seat, with a backrest part and a seat base part, each with a support, characterised by the fact that at least one support in accordance with one of Claims 1 to 10 is incorporated into the backrest part (4) and/or into the seat base (3).

12. Seat as in Claim 11, characterised by the fact that the reversibly thermoplastic plastic layers in the backrest part (4) and the seat base (3) are of different densities.

## Revendications

1. Partie de soutien d'un siège, en particulier pour des sièges pour automobiles, qui présente au moins une couche en matière plastique,
caractérisée en ce que la ou chaque couche de matière plastique (9) se compose d'un matériau thermiquement déformable d'une façon réversible, qui est déformable, à une température de déformation plastique qui dépasse la température d'utilisation, depuis une première forme spatiale vers une seconde forme spatiale pouvant être spécifiée d'une façon quelconque, et qui conserve cette seconde forme spatiale dans une gamme de températures inférieure à la température de déformation, et en ce qu'un dispositif chauffant (8) en relation avec la couche de matière plastique est prévu, lequel est conçu pour le traitement thermique de la couche de matière plastique (9) composée du matériau thermiquement réversible.

2. Partie de soutien selon la revendication 1, caractérisée en ce que le matériau thermiquement déformable plusieurs fois d'une façon réversible de la couche de matière plastique (9) est conçu en tant que matière plastique présentant des pores fermés renfermant du gaz.

3. Partie de soutien selon la revendication 1 ou la revendication 2,
caractérisée en ce que le matériau thermiquement déformable d'une façon réversible est conçu en tant que mousse d'éthylènevinyle présentant des cavités d'air fermées.

4. Partie de soutien selon l'une des revendications 1 à 3, caractérisée en ce que la température de déformation du matériau thermiquement réversible est comprise entre 50 °C et 90 °C, de préférence égale à 80 °C.

5. Partie de soutien selon l'une des revendications 1 à 4, caractérisée en ce que la densité du matériau thermiquement déformable d'une façon réversible est comprise entre 10 kg/m³ et 200 kg/m³, de préférence entre 30 kg/m³ et 180 kg/m³.

6. Partie de soutien selon l'une des revendications 1 à 5, caractérisée en ce que le dispositif chauffant est réalisé en tant que chauffage ohmique, qui présente des éléments chauffants (13) reliés à une source de courant (15).

7. Partie de soutien selon la revendication 6, caractérisée en ce que les éléments chauffants (13) sont réalisés en tant que circuits électriques conducteurs ou en tant que fils électriques conducteurs ou équivalents.

8. Partie de soutien selon la revendication 7, caractérisée en ce que les éléments chauffants sont réalisés en tant que fibres de carbone (14).

9. Partie de soutien selon l'une des revendications 6 à 8, caractérisée en ce que les éléments chauffants sont insérés dans la couche de matière plastique composée d'un matériau thermiquement déformable d'une façon réversible et/ou sont un constituant d'au moins une couche chauffante (8) qui est reliée avec la couche de matière plastique (9) en matériau thermiquement déformable d'une façon réversible.

10. Partie de soutien selon l'une des revendications 1 à 9, caractérisée par une structure en plusieurs couches, qui présente la couche de matière plastique (9) au moins composée du matériau thermiquement déformable d'une façon réversible, une couche de support (7) destinée à supporter la couche de matière plastique (9), éventuellement au moins une couche chauffante (8) et une couche de recouvrement (10) destinée à recouvrir la ou chaque couche de matière plastique et/ou la couche chauffante, les couches étant reliées les unes aux autres par contrecollage, collage, laminage, accrochage ou équivalent.

11. Siège, en particulier siège pour véhicule automobile, présentant une partie de dossier et une partie de siège, qui présentent respectivement un corps d'appui,
caractérisé en ce qu'est intégrée dans la partie de dossier (4) et/ou dans la partie de siège (3) au moins une partie de soutien selon l'une des revendications 1 à 10.

12. Siège selon la revendication 11, caractérisé en ce que les couches de matière plastique se composant d'un matériau thermiquement déformable d'une façon réversible présentent dans la partie de dossier (4) et dans la partie de siège (3), des densités différentes.
